# EUROPEAN PATENT APPLICATION

(11) **EP 4 694 082 A1**
(43) Date of publication of application: **11.02.2026**
(21) Application number: 24778257.6
(22) Date of filing: 29.03.2024
(51) Int. Cl.: H04L 51/224

(54) **NOTIFICATION MESSAGE CONTROL PROCESSING METHOD AND APPARATUS, ELECTRONIC DEVICE AND STORAGE MEDIUM**

(30) Priority: 30.03.2023 CN 202310335571
(71) Applicant: GUANGDONG OPPO MOBILE TELECOMMUNICATIONS CORP., LTD., Dongguan, Guangdong 523860 (CN)
(72) Inventor: HUANG, Zhongjiang, Dongguan, Guangdong 523860 (CN)
(74) Representative: Grassi, Stefano
(86) International application number: PCT/CN2024/084919
(87) International publication number: WO 2024/199472

(57) **Abstract**

The present application discloses a notification message processing method and apparatus, an electronic device and a storage medium. The method includes: when an electronic device runs a first system in the foreground, displaying a notification viewing interface for a notification message to be processed; and in response to a first operation on the notification viewing interface, generating a control instruction based on the first operation. In the method, a source system of a notification message can be instructed to directly process the notification message according to the control instruction.

## Description

### CROSS-REFERENCE OF RELATED APPLICATION

This application claims priority to Chinese Patent Application No. 202310335571.X, filed March 30, 2023, the entire disclosure of which is incorporated herein by reference.

### TECHNICAL FIELD

The disclosure relates to the technical field of controlling devices, and in particular to a notification message processing method and apparatus, an electronic device, and a storage medium.

### BACKGROUND

With the popularization of electronic devices such as smart watches, more and more users use smart electronic devices for activities, for example listening to music, running, and making near-field payments. However, the existing manners of processing notification messages on the smart electronic devices lack universality, and the user experience needs to be improved.

### SUMMARY

In view of this, embodiments of the disclosure provide a notification message processing method and apparatus, an electronic device, and a storage medium to alleviate the above problems.

In a first aspect, embodiments of the disclosure provide the notification message processing method. The method is implemented by an electronic device. The electronic device is equipped with a first processor and a second processor, the first processor is configured to run a first system, the second processor is configured to run a second system, a communication connection is established between the electronic device and a mobile terminal, and the mobile terminal runs a third system. The method includes: a notification viewing interface is displayed for a notification message that is to be processed, in a case where the electronic device runs the first system in foreground; and in response to a first operation acting on the notification viewing interface, a control instruction is generated based on the first operation, where the control instruction is configured to cause a target system to process, according to the control instruction, the notification message, the target system is a system that is identified by a specified identification field of the notification message, and the target system is the first system, the second system, or the third system.

In a second aspect, the embodiments of the disclosure provide the notification message processing apparatus. The apparatus is implemented by an electronic device. The electronic device is equipped with a first processor and a second processor, the first processor is configured to run a first system, the second processor is configured to run a second system, and a communication connection is established between the electronic device and a mobile terminal, the mobile terminal runs a third system. The apparatus includes a notification viewing interface displaying module and a control instruction generating module. The notification viewing interface displaying module is configured to display a notification viewing interface for a notification message that is to be processed, in a case where the electronic device runs the first system in foreground. The control instruction generating module is configured to generate a control instruction based on the first operation, in response to a first operation acting on the notification viewing interface. The control instruction is configured to cause a target system to process, according to the control instruction, the notification message, the target system is a system that is identified by a specified identification field of the notification message, and the target system is the first system, the second system, or the third system.

In a third aspect, the embodiments of the disclosure provide an electronic device. The electronic device includes one or more processors and a memory. One or more programs are stored in the memory and configured to be executed by the one or more processors, and the one or more programs are configured to cause the method of the first aspect to be implemented.

In a fourth aspect, the embodiments of the disclosure provide a computer-readable storage medium having program codes stored thereon. The program codes, when being executed, cause the method of the first aspect to be implemented.

### BRIEF DESCRIPTION OF THE DRAWINGS

In order to more clearly illustrate technical solutions in the embodiments of the disclosure, drawings to be used in the embodiments are briefly described below. Apparently, the following drawings are merely some embodiments of the disclosure, and those skilled in the art can obtain other drawings according to these drawings without paying any creative effort.
FIG. 1 is a flowchart of a notification message processing method according to an embodiment of the disclosure.
FIG. 2 is a schematic diagram illustrating displaying of received notification messages by a first system according to embodiments of the disclosure.
FIG. 3 is a schematic diagram illustrating displaying of a received notification message by the first system according to embodiments of the disclosure.
FIG. 4 is a schematic diagram illustrating a notification viewing interface according to embodiments of the disclosure.
FIG. 5 is a schematic diagram illustrating the notification viewing interface according to embodiments of the disclosure.
FIG. 6 is a flowchart of a notification message processing method according to another embodiment of the disclosure.
FIG. 7 is a schematic diagram illustrating that the notification viewing interface displays at least one action option.
FIG. 8 is another schematic diagram illustrating that the notification viewing interface displays at least one action option.
FIG. 9 is a flowchart of a notification message processing method according to yet another embodiment of the disclosure.
FIG. 10 is a schematic diagram illustrating displaying of at least one action option on a second viewing interface according to embodiments of the disclosure.
FIG. 11 is a flowchart of a notification message processing method according to still another embodiment of the disclosure.
FIG. 12 is a flowchart of a notification message processing method according to still yet another embodiment of the disclosure.
FIG. 13 is a flowchart of a notification message processing method according to a further embodiment of the disclosure.
FIG. 14 is a schematic diagram illustrating the notification viewing interface according to the embodiments of the disclosure.
FIG. 15 is a flowchart of processing a notification message according to the embodiments of the disclosure.
FIG. 16 is a schematic structural diagram of a notification message processing apparatus according to the embodiments of the disclosure.
FIG. 17 is a block diagram of an electronic device for executing the notification message processing method according to the embodiments of the disclosure.
FIG. 18 is a diagram of a storage unit for storing or carrying program codes for realizing the notification message processing method according to the embodiments of the disclosure.

### DETAILED DESCRIPTION OF PREFERRED EMBODIMENTS

The technical schemes in the embodiments of the disclosure will be described clearly and comprehensively with reference to the drawings in the embodiments of the disclosure. Apparently, the described embodiments are only a part of the embodiments of the disclosure, not all of the embodiments. All other embodiments, obtained by those of ordinary skill in the art based on the embodiments of the disclosure without creative efforts, fall within the scope of protection of the disclosure.

With the popularization of wearable devices such as smart watches, more and more users use smart electronic devices for operations such as listening to music, running, and making near-field payments. Even when the users do not carry mobile terminals or it is inconvenient for the users to use mobile terminals, they can use smart wearable devices to process notification messages for mobile terminals. However, the existing manners of processing notification messages using smart wearable devices instead of mobile terminals lack universality, and the user experience needs to be improved.

In view of the above-mentioned problems, after long-term research, the inventor has proposed a notification message processing method and apparatus, an electronic device, and a storage medium as provided in the embodiments of the disclosure. In the method, a first system may generate a corresponding control instruction according to a source of a notification message, and then instructs a source system of the notification message (i.e., a target system) to directly process, according to the control instruction, the notification message, which improves the universality and flexibility of notification message processing, and thus improves the user experience.

Various embodiments of the disclosure will be described in detail below with reference to the drawings.

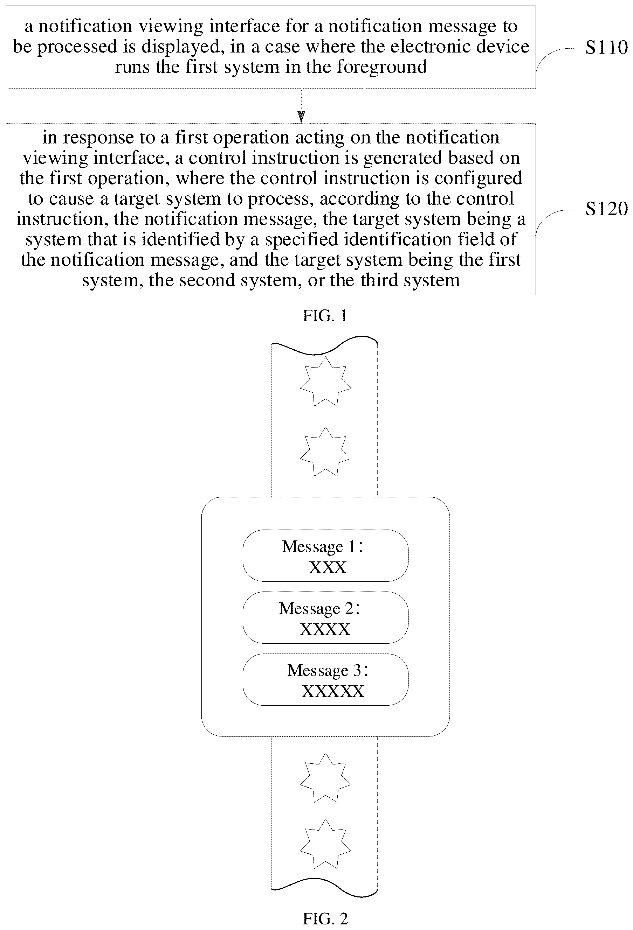

Referring to FIG. 1, an embodiment of the disclosure provides a notification message processing method, which method may be implemented by an electronic device. In an implementation of the disclosure, the electronic device may be a wearable device such as a smart wearable watch; and in this case, the smart wearable watch may process notification messages for a mobile terminal. Alternatively, the electronic device may be a mobile communication device such as a mobile phone or a tablet computer; and in this case, mobile phone 1 may process a notification message for mobile phone 2. Mobile phone 1 and mobile phone 2 may respectively belong to two family members, or a couple (spouses).

In some implementations, the electronic device is equipped with a first processor and a second processor, the first processor is configured to run a first system, the second processor is configured to run a second system. A communication connection is established between the electronic device and a mobile terminal, and the mobile terminal is adapted for a third system (i.e., the mobile terminal is configured to run the third system). In at least one embodiment, the first system may be a real-time operating system. The first system is not limited to a specific type. For example, the first system may be FreeRTOS, ThreadX, or other systems. The method includes S110 and S120.

At S110, a notification viewing interface for a notification message to be processed is displayed, in a case where the electronic device runs the first system in the foreground.

The notification message may be a system notification message, a notification message of a third-party application, or a notification message of any other type.

In the implementations of the disclosure, in a case where the first system of the electronic device runs in the foreground, the second system may be switched to run in the background or be in a sleep state. In this case, the first system may receive a notification message transmitted from an operating platform of the first system (i.e., the electronic device), or receive a notification message transmitted from other electronic devices (i.e., the mobile terminal), or receive both a notification message transmitted from the operating platform of the first system and a notification message transmitted from other electronic devices.

In at least one embodiment, the to-be-processed notification message received by the first system may originate from the first system, the second system, and/or the third system. The electronic device and the mobile terminal are two distinct devices. When the notification message received by the first system is transmitted from the operating platform of the first system (i.e., the electronic device), the first system may receive the notification message(s) transmitted from an application configured in the first system or transmitted from the first system itself, and may also receive the notification message(s) transmitted from an application configured in the second system or transmitted from the second system itself. When the notification message received by the first system is transmitted from other electronic devices (i.e., the mobile terminal), the first system may receive the notification message(s) transmitted from an application configured in the third system or transmitted from the third system itself.

As an implementation, the first system may receive notification messages that are transmitted, according to a specified message push protocol, from the first system, the second system, and/or the third system.

It is notable that, when the notification messages received by the first system are transmitted from the second system, the first system may process various types of notification messages for the second system; when the notification messages received by the first system are transmitted from the third system, the first system may process various types of notification messages for the third system.

After the first system receives the notification message, the first system may display the notification message on a display interface corresponding to the first system. When the first system runs in the foreground, a display interface of the electronic device may serve as the display interface corresponding to the first system.

In at least one embodiment, the number of notification message displayed on the display interface corresponding to the first system may be less than or equal to the number of notification message received by the first system. That is to say, the display interface corresponding to the first system may display only one notification message or multiple notification messages. When multiple notification messages need to be displayed, these notification messages may be displayed in sequence according to receiving times or types of these received messages. When one notification message needs to be displayed, the notification message may be displayed in a pop-up window which may be overlaid on the topmost layer of currently displayed content.

In a specific application scenario, referring to FIG. 2, it is a schematic diagram illustrating displaying of received notification messages by the first system according to the embodiments of the disclosure. As illustrated in FIG. 2, after the first system receives the notification messages, the first system may display the received notification messages individually on a dial interface of the smart wearable watch. A receiving order of "Message 1: XX", "Message 2: XXXX", and "Message 3: XXXXX" illustrated in FIG. 2 may be Message 3: XXXXX > Message 2: XXXX > Message 1: XX, that is, Message 3 is received first, then Message 2, and finally Message 1. Alternatively, the receiving order may be Message 3: XXXXX < Message 2: XXXX < Message 1: XX, that is, Message 1 is received first, then Message 2, and finally Message 3. Message 1, Message 2, and Message 3 may be of different types or the same type, and the specific content of Message 1, Message 2, and Message 3 is not limited. It is notable that the display style of the messages illustrated in FIG. 2 is only an example of displaying the notification messages by the first system according to the disclosure, and does not constitute a limitation on the display style.

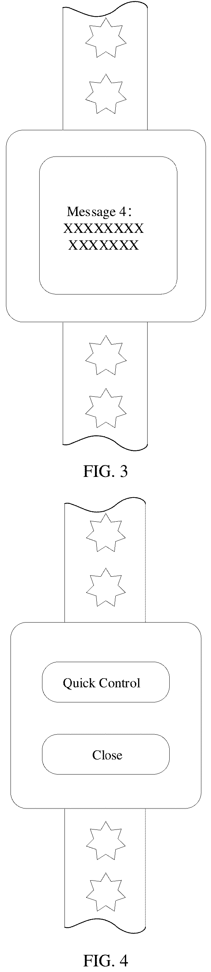

In a specific application scenario, referring to FIG. 3, it is another schematic diagram illustrating displaying of the received notification message by the first system according to the embodiments of the disclosure. As illustrated in FIG. 3, after the first system receives the notification message, the first system may display the received notification message in a pop-up window on a dial interface of the smart wearable watch, such as "Message 4: XXXXXXXXXXXXXXX" illustrated in FIG. 4.

In some implementations, when only one notification message is displayed on the display interface corresponding to the first system, this displayed notification message may be determined as the notification message to be processed; and when multiple notification messages are displayed on the display interface corresponding to the first system, a notification message selected by user may be determined as the notification message to be processed.

When only one notification message is displayed on the display interface corresponding to the first system, the displayed notification message may be a brief introduction of the notification message or specific content of the notification message. When the brief introduction of the notification message is displayed, in response to a touch operation acting on the notification message, the notification viewing interface for the notification message to be processed may be triggered to be displayed. When the specific content of the notification message is displayed, the display interface may serve as a notification viewing interface for the notification message to be processed. When there are multiple notification messages displayed on the display interface corresponding to the first system, a user's touch operation acting on any notification message would trigger the displaying of a notification viewing interface for the touched notification message.

The notification viewing interface may also serve as a notification processing interface. The notification viewing interface is configured to display a message processing manner(s) for the notification message to be processed, and different notification messages may have different message processing manners.

In some implementations, the notification viewing interface may be configured with a quick processing (quick action) function button and a general processing function button. A specific function button displayed on the notification viewing interface may be determined according to the type of the notification message. For example, when the notification message carries a field corresponding to the quick processing function, touching the notification message results in jumping to the notification viewing interface, and the quick processing function button and the general processing function button may be displayed on the notification viewing interface. When the notification message does not carry the field corresponding to the quick processing function, touching the notification message results in jumping to the notification viewing interface, and the general processing function button of the notification message may be displayed on the notification viewing interface. It is notable that, the configured quick processing function button may be displayed on the notification viewing interface which displays the specific content of the notification message, or the general processing function is displayed first, followed by the quick processing function. That is, the display order of the quick processing function and the general processing function is not limited, for example, they may be displayed side by side or in a progressive manner, which is not specifically limited.

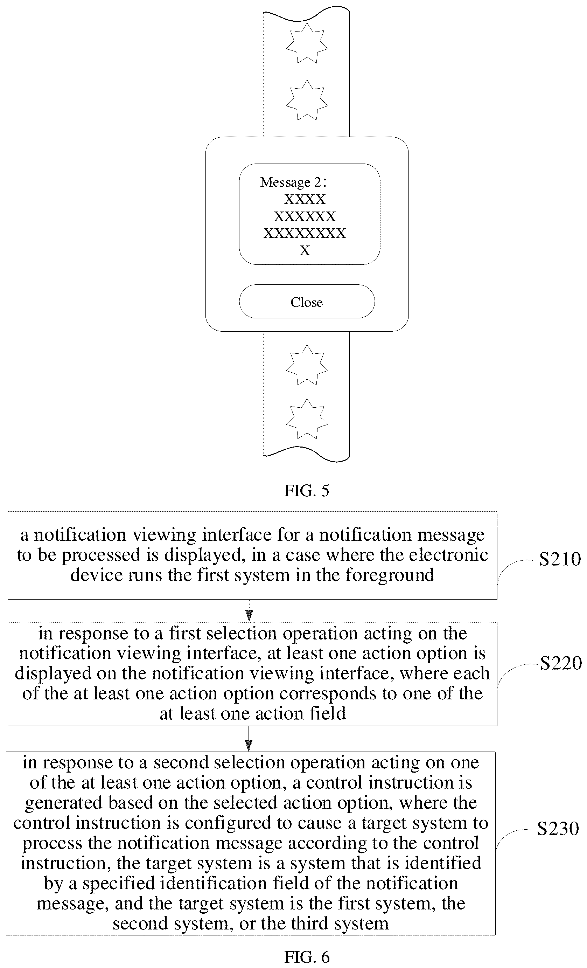

In a specific application scenario, referring to FIG. 4 and FIG. 5, each of them schematically illustrates the notification viewing interface according to the embodiments of the disclosure. Assuming that Message 1 illustrated in FIG. 2 carries a field corresponding to the quick processing function, when the user touches Message 1, it may jump to the notification viewing interface illustrated in FIG. 4. This notification viewing interface includes a "Quick Control" function button and a "Close" function button, in which "Quick Control" refers to the above-mentioned quick processing function, and "Close" refers to the above-mentioned general processing function. The naming of the quick processing function and the general processing function, as well as their specific functions, may be adjusted according to actual needs, and the descriptions in the embodiments are provided merely as examples. In this case, touching the "Quick Control" function button may enable quick processing of the notification message, see subsequent descriptions for details; and touching the "Close" function button may enable closing of the notification message.

Assuming that Message 2 illustrated in FIG. 2 does not carry the field corresponding to the quick processing function, when the user touches Message 2, it may jump to the notification viewing interface illustrated in FIG. 5. This notification viewing interface displays the specific content of Message 2 and a "Close" function button. In this case, touching the "Close" function button may enable closing of the notification message.

At S 120, in response to a first operation acting on the notification viewing interface, a control instruction is generated based on the first operation, where the control instruction is configured to cause a target system to process, according to the control instruction, the notification message, the target system being a system that is identified by a specified identification field of the notification message, and the target system being the first system, the second system, or the third system.

As an implementation, regardless of the message processing manner of the notification message displayed on the notification viewing interface, the control instruction may be generated based on the first operation, in response to detecting the first operation acting on the notification viewing interface. In the implementations of the disclosure, the types of touch operations and the first operation are not limited, for example, they may be a clicking operation, a sliding operation, a tapping operation, an air gesture, or a touching operation. The specific type of the touch operation may be the same as or different from the specific type of the first operation, which is not specifically limited.

In at least one embodiment, taking the notification viewing interface illustrated in FIG. 4 as an example, when the first operation is performed at a position of the quick control function button, a quick processing instruction may be generated as the control instruction based on the first operation; and when the first operation is performed at a position of the "Close" function button, a close instruction may be generated as the control instruction based on the first operation.

In the implementations of the disclosure, the target system may be the first system, the second system, or the third system. The control instruction may be configured to enable the target system to process the notification message according to the control instruction, and the target system is a system that is identified by the specified identification field of the notification message. It is notable that, at any given moment, the source of the notification message to be processed may be unique.

When the target system is the first system or the second system, the specified identification field may include a device identification field and a system identification field. When the target system is the third system, the specified identification field may include a device identification field. The device identification field is configured to identify the device from which the notification message is transmitted, and the system identification field is configured to further identify the system from which the notification message is transmitted.

After the first system generates the control instruction based on the first operation, in an implementation, in a case where the target system is the second system, the control instruction may be transmitted to the second system, so as to control the second system to process the notification message according to the control instruction. In a specific implementation, when the first system runs in the foreground and the second system runs in the background or is in a sleep state, the first system may process the notification message for the second system, and transmits a processing result contained in the control instruction to the second system. In this way, the second system is controlled to quickly process the notification message according to the control instruction.

Alternatively, in a case where the target system is the third system, the first system may transmit the control instruction to the third system, so that the third system is controlled to process the notification message according to the control instruction. In some specific implementations, it is assumed that the operating platform of the first system is a watch, and the operating platform of the second system is a mobile phone. In this case, when the user is playing mahjong, constantly checking the mobile phone may affect the mahjong playing experience. Thus, the user may use the worn watch to process the notification message for the mobile phone. That is, when the mobile phone receives a new notification message, the mobile phone transmits the notification message to the watch synchronously. The user may briefly view the message on the watch, process the message on the watch, and then a control instruction is generated so as to control the mobile phone to (quickly) process the notification message.

In at least one embodiment, the device identification field in the notification message may be identified upon receipt of the notification message, so as to determine the source of the notification message, that is, to determine the platform on which the target system transmitting the notification message runs. Alternatively, the device identification field in the notification message may be identified in response to detecting the touch operation acting on the notification message. Alternatively, the device identification field in the notification message may be identified after the control instruction is generated. The specific time at which the device identification field in the notification message is identified is not limited, that is, the identification may occur at other times besides the above-mentioned examples.

The device identification field may be understood as a location pointer of the notification message. As an implementation, the source of the notification message may be determined by identifying the value of the device identification field in the notification message. For example, in a specific application scenario, when the value of the device identification field is "phone", the source of the notification message may be determined as a mobile phone, that is, the notification message is transmitted from the third system running on the mobile phone. When the value of the device identification field is "local", the source of the notification message may be determined as a watch, that is, the notification message is transmitted from the second system running on the watch. The first system refers to the first system running on the watch, the first system may be a small-core system, and the second system may be a large-core system. "Phone" and "local" may both represent device names.

In at least one embodiment, the first system may be a real-time operating system, the second system may be an Android system, and the first system, the second system, and the third system comply with the same message push protocol. In other words, the same protocol is followed when the first system transmits messages to the second system and when the second system transmits messages to the first system, the same protocol is followed when the first system transmits messages to the third system and when the third system transmits messages to the first system, and the same protocol is followed when the second system transmits messages to the third system and when the third system transmits messages to the second system. The specific type and the content of the protocol may be set according to actual needs.

In the notification message processing method provided by the embodiments of the disclosure, in a case where the electronic device runs the first system in the foreground, the notification viewing interface for the notification message to be processed is displayed. In response to the first operation acting on the notification viewing interface, the control instruction is generated based on the first operation. The control instruction is configured to cause the target system to process the notification message according to the control instruction, and the target system is a system that is identified by the specified identification field of the notification message, and the target system is the first system, the second system, or the third system. In this way, the first system may generate the corresponding control instruction according to the source of the notification message, and then instructs the source system of the notification message (i.e., the target system) to directly process the notification message according to the control instruction, which improves the universality and flexibility of notification message processing, and thus improves the user experience.

Referring to FIG. 6, it illustrates a notification message processing method according to another embodiment of the disclosure. The method may be implemented by an electronic device. The electronic device is equipped with a first processor and a second processor, the first processor is configured to run a first system, the second processor is configured to run a second system. A communication connection is established between the electronic device and a mobile terminal, and the mobile terminal is adapted for a third system (i.e., the mobile terminal is configured to run the third system). The method includes S210, S220, and S230.

At S210, a notification viewing interface for a notification message to be processed is displayed, in a case where the electronic device runs the first system in the foreground.

The specific implementation of S210 may refer to the description of S110 in the previous embodiments, which will not be repeated here. In the implementations, the first system of the electronic device runs in the foreground, and the second system of the electronic device may be in a sleep state or run in the background. The notification message includes at least one action field.

At S220, in response to a first selection operation acting on the notification viewing interface, at least one action option is displayed on the notification viewing interface, where each of the at least one action option corresponds to one of the at least one action field.

In the implementations of the disclosure, both the quick processing function and the general processing function for the notification message may be displayed on the notification viewing interface. In an implementation, at least one action option is displayed on the notification viewing interface in response to the first selection operation acting on the notification viewing interface. Each action option corresponds to one action field.

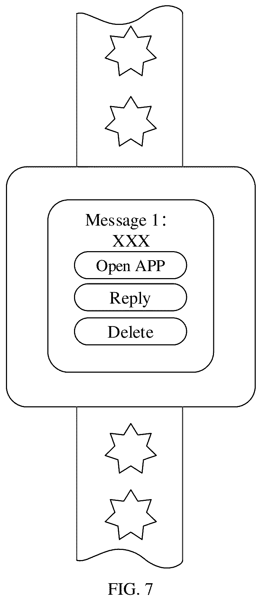

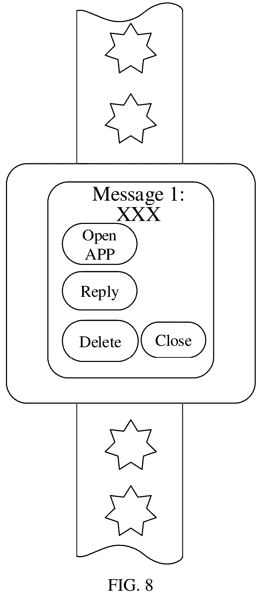

For example, a specific application scenario is illustrated in FIG. 7 and FIG. 8, each of them schematically illustrates that the notification viewing interface displays at least one action option. As an implementation, in response to detecting the first selection operation acting on the notification viewing interface illustrated in FIG. 2, the notification viewing interface may be triggered to jump to an interface displaying at least one action option as illustrated in FIG. 7, or to an interface displaying at least one action option as illustrated in FIG. 8, where the interfaces illustrated in FIG. 7 and FIG. 8 are still referred to as the notification viewing interface. As illustrated in FIG. 7, the displayed action options include "Open APP", "Reply", and "Delete". As illustrated in FIG. 8, the displayed action options include "Open APP", "Reply", "Delete", and "Close". The notification viewing interface may display the quick processing function button for the notification message, the general processing function button for the notification message, or both the quick processing function button and the general processing function button for the notification message. The specific type of the first selection operation is not limited, for example, it may be a touching operation, a clicking operation, a sliding operation, or a tapping operation. The first selection operation is configured to select the notification message to be processed. For example, the first selection operation may be configured to select Message 1 on the notification viewing interface illustrated in FIG. 2 as the notification message to be processed.

At S230, in response to a second selection operation acting on one of the at least one action option, a control instruction is generated based on the selected action option, where the control instruction is configured to cause a target system to process the notification message according to the control instruction, the target system is a system that is identified by a specified identification field of the notification message, and the target system is the first system, the second system, or the third system.

When at least one action option is displayed on the notification viewing interface, one action option may be directly selected to process the notification message. Specifically, as an implementation, in response to the second selection operation acting on one action option, the control instruction may be generated based on the selected action option. The second selection operation is configured to select the action option corresponding to a desired message processing manner for the notification message. For example, when the user wants to perform "Delete" processing on the notification message, the user may select the "Delete" action option to generate a control instruction based on the "Delete" action option, in which the control instruction is configured to control the target system to delete the notification message.

In the notification message processing method provided in the embodiments of the disclosure, in a case where the electronic device runs the first system in the foreground, the notification viewing interface for the notification message to be processed is displayed. In response to the first selection operation acting on the notification viewing interface, at least one action option is displayed on the notification viewing interface, where each of the at least one action option corresponds to one of the at least one action field. In response to the second selection operation acting on one of the at least one action option, the control instruction is generated based on the selected action option. The control instruction is configured to cause the target system to process the notification message according to the control instruction, and the target system is a system that is identified by the specified identification field of the notification message, and the target system is the first system, the second system, or the third system. In this way, the first system may generate the corresponding control instruction according to the source of the notification message, and then instructs the source system of the notification message (i.e., the target system) to directly process the notification message according to the control instruction, which improves the universality and flexibility of notification message processing, and thus improves the user experience.

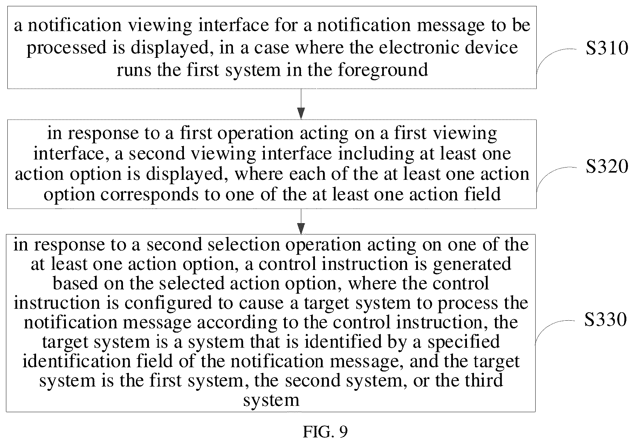

Referring to FIG. 9, it illustrates a notification message processing method according to yet another embodiment of the disclosure. The method may be implemented by an electronic device. The electronic device is equipped with a first processor and a second processor, the first processor is configured to run a first system, the second processor is configured to run a second system. A communication connection is established between the electronic device and a mobile terminal, and the mobile terminal is adapted for a third system (i.e., the mobile terminal is configured to run the third system). The method includes S310, S320, and S330.

At S310, a notification viewing interface for a notification message to be processed is displayed, in a case where the electronic device runs the first system in the foreground.

The specific implementation of S310 may refer to the description of S110 in the previous embodiments, which will not be repeated here. In the implementations, the first system of the electronic device runs in the foreground, and the second system of the electronic device may be in a sleep state or run in the background.

At S320, in response to a first operation acting on a first viewing interface, a second viewing interface including at least one action option is displayed, where each of the at least one action option corresponds to one of the at least one action field.

In the implementations of the disclosure, the notification message may further include at least one action field. The content of the action field indicates a quick processing operation for processing the notification message. The content of the action field (including the number of items and the actual item) may be configured by the application on the target system. That is, the second viewing interface may display as many action options as the number of actions configured by the application on the target system, with each action field corresponding to one action option. The content or number of action options of different applications may be the same or different.

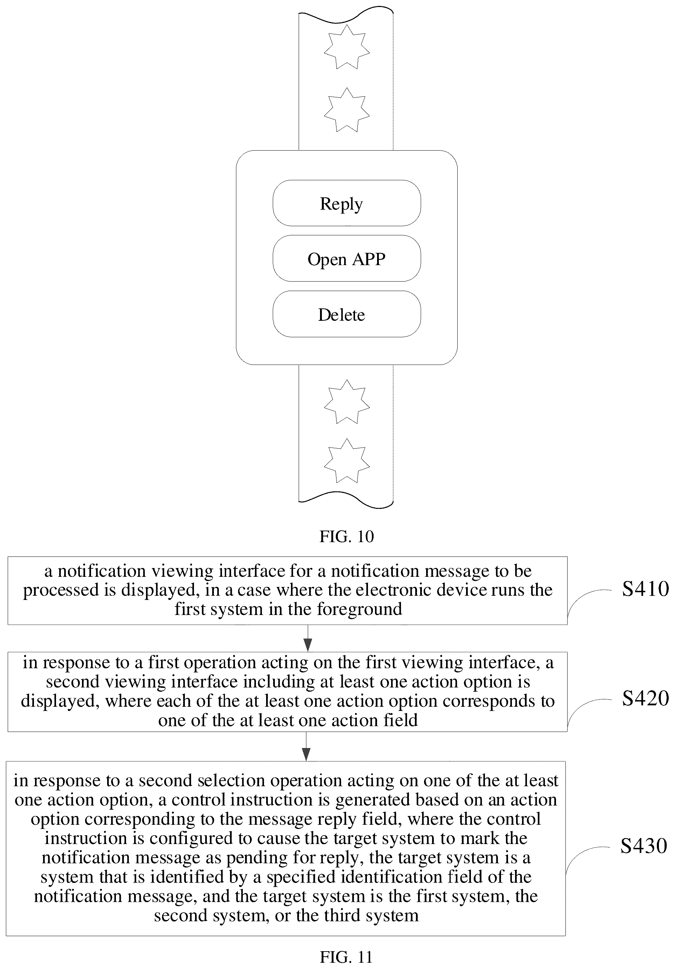

The notification viewing interface may include the first viewing interface and the second viewing interface. In this way, the first viewing interface may be displayed in response to detecting a touch operation acting on the notification message. In addition, when the notification message includes at least one action field, the first viewing interface may display the quick control function button and the general control function button described in the previous embodiments. In this case, in response to detecting a first operation acting on the quick control function button of the first viewing interface, a second viewing interface including at least one action option may be displayed. For example, in a specific application scenario, referring to FIG. 10, a schematic diagram of displaying at least one action option on the second viewing interface according to some embodiments of the disclosure is illustrated. In response to a user's clicking operation on the quick control function button illustrated in FIG. 4, the interface may jump to the second viewing interface illustrated in FIG. 10, where the second viewing interface displays the action options of the quick control function, such as "Reply", "Open APP", and "Delete". By displaying the message processing interfaces in a hierarchical manner, accidental operations can be avoided, thereby improving the accuracy, diversity, and flexibility of message processing.

When the notification message does not include an action field, the first viewing interface may display the general control function button described in the previous embodiments. In this case, in response to detecting a first operation acting on the general control function button of the first viewing interface, a second viewing interface including a general action option may be displayed. For example, only the "Close" function as illustrated in FIG. 10 is displayed on the second viewing interface in this case. It is notable that, for this case, the first viewing interface and the second viewing interface may be the same interface, that is, touching the notification message may enable direct jumping to an interface displaying the specific content of the notification message and the general processing function button, or jumping to an interface displaying only the general processing function button. In this way, the notification message can be processed quickly. For example, in a specific application scenario, when the electronic device receives a notification message, the notification message may be displayed in a quick notification bar. For a certain message displayed in the quick notification bar, in response to detecting a sliding operation acting on the message, a notification processing interface (which may refer to the notification viewing interface described in the embodiments) with a "Delete" button may be called up. In response to detecting a touch operation acting on the "Delete" button of the notification processing interface, the notification message can be quickly deleted. That is, the specific display style and invocation method for the first viewing interface, the second viewing interface, the notification viewing interface are not limited in the disclosure.

At S330, in response to a second selection operation acting on one of the at least one action option, a control instruction is generated based on the selected action option, where the control instruction is configured to cause a target system to process the notification message according to the control instruction, the target system is a system that is identified by a specified identification field of the notification message, and the target system is the first system, the second system, or the third system.

When the notification message includes an action field, in response to detecting the second selection operation acting on an action option displayed on the second viewing interface, the first system may generate the control instruction based on the selected action option.

In the implementations of the disclosure, the second viewing interface is configured with function buttons corresponding to the action options. That is, the quick control functions such as "Reply", "Open APP", and "Delete" illustrated in FIG. 10 are all configured with function buttons (which may be virtual buttons or mechanical buttons). A user's touch operation acting on a certain button (i.e., selection via touch, or through other operational manners, the specific selection manner is not limited here) may trigger the generation of the control instruction based on the action option corresponding to the button. In an implementation, in response to detecting a third operation acting on the function button corresponding to an action option, a control instruction may be generated based on the touched function button. The specific type of the third operation is similar to that of the above-mentioned first operation, and is not limited herein.

When the notification message does not include an action field, and the first viewing interface and the second viewing interface are different interfaces, a control instruction may be generated based on the general control function, in response to the second selection operation acting on the second viewing interface.

In the notification message processing method provided in the embodiments of the disclosure, in a case where the electronic device runs the first system in the foreground, the notification viewing interface for the notification message to be processed is displayed. In response to the first operation acting on the first viewing interface, the second viewing interface including at least one action option is displayed, where each of the at least one action option corresponds to one of the at least one action field. In response to the second selection operation acting on one of the at least one action option, the control instruction is generated based on the selected action option. The control instruction is configured to cause the target system to process the notification message according to the control instruction, and the target system is a system that is identified by the specified identification field of the notification message, and the target system is the first system, the second system, or the third system. In this way, the first system may generate the corresponding control instruction according to the source of the notification message, and then instructs the source system of the notification message (i.e., the target system) to directly process the notification message according to the control instruction, which improves the universality and flexibility of notification message processing, and thus improves the user experience.

Referring to FIG. 11, it illustrates a notification message processing method according to still another embodiment of the disclosure. The method may be implemented by an electronic device. The electronic device is equipped with a first processor and a second processor, the first processor is configured to run a first system, the second processor is configured to run a second system. A communication connection is established between the electronic device and a mobile terminal, and the mobile terminal is adapted for a third system (i.e., the mobile terminal is configured to run the third system). The method includes S410, S420, and S430.

At S410, a notification viewing interface for a notification message to be processed is displayed, in a case where the electronic device runs the first system in the foreground.

The specific implementation of S410 may refer to the description of S110 in the previous embodiments, which will not be repeated here.

At S420, in response to a first operation acting on the first viewing interface, a second viewing interface including at least one action option is displayed, where each of the at least one action option corresponds to one of the at least one action field.

The specific implementation of S420 may refer to the description of S320 in the previous embodiments, which will not be repeated here.

At S430, in response to a second selection operation acting on one of the at least one action option, a control instruction is generated based on an action option corresponding to the message reply field, where the control instruction is configured to cause the target system to mark the notification message as pending for reply, the target system is a system that is identified by a specified identification field of the notification message, and the target system is the first system, the second system, or the third system.

In the implementations of the disclosure, the action option may include a message reply field (i.e., the "Reply" quick control function button illustrated in FIG. 10). In this way, in response to the second selection operation acting on the action option, the control instruction may be generated based on the action option corresponding to the message reply field. The control instruction is configured to cause the target system to mark the notification message as pending for reply. The control instruction may be used to invoke a corresponding App in the target system, and then the notification message may be replied in the APP. In other words, when the selected action option corresponds to the message reply field, the generated control instruction may be configured to control the target system to open the corresponding application and perform message reply.

In the implementations of the disclosure, the action field may include a message deletion field. With regard to the message deletion field, in response to the second selection operation acting on one of the at least one action option, a control instruction is generated based on the action option corresponding to the message deletion field. This control instruction may be configured to cause the target system to delete the notification message.

In the implementations of the disclosure, the action field may include a message open field, which is configured to open an application corresponding to the notification message. In response to the second selection operation acting on one of the at least one action option, a control instruction is generated based on the action option corresponding to the message open field. This control instruction may be configured to cause the target system to open an application for the notification message.

The above-mentioned examples of action options are only for illustrating the solution, and do not constitute a limitation.

In the notification message processing method provided by the embodiments of the disclosure, in a case where the electronic device runs the first system in the foreground, the notification viewing interface for the notification message to be processed is displayed. In response to the first operation acting on the first viewing interface, the second viewing interface including at least one action option is displayed, where each of the at least one action option corresponds to one of the at least one action field. In response to the second selection operation acting on one of the at least one action option, the control instruction is generated based on the action option corresponding to the message reply field. The control instruction is configured to cause the target system to mark the notification message as pending for reply. The target system is a system that is identified by the specified identification field of the notification message, and the target system is the first system, the second system, or the third system. In this way, the first system may generate the corresponding control instruction according to the source of the notification message, and then instructs the source system of the notification message (i.e., the target system) to directly process the notification message according to the control instruction, which improves the universality and flexibility of notification message processing, and thus improves the user experience.

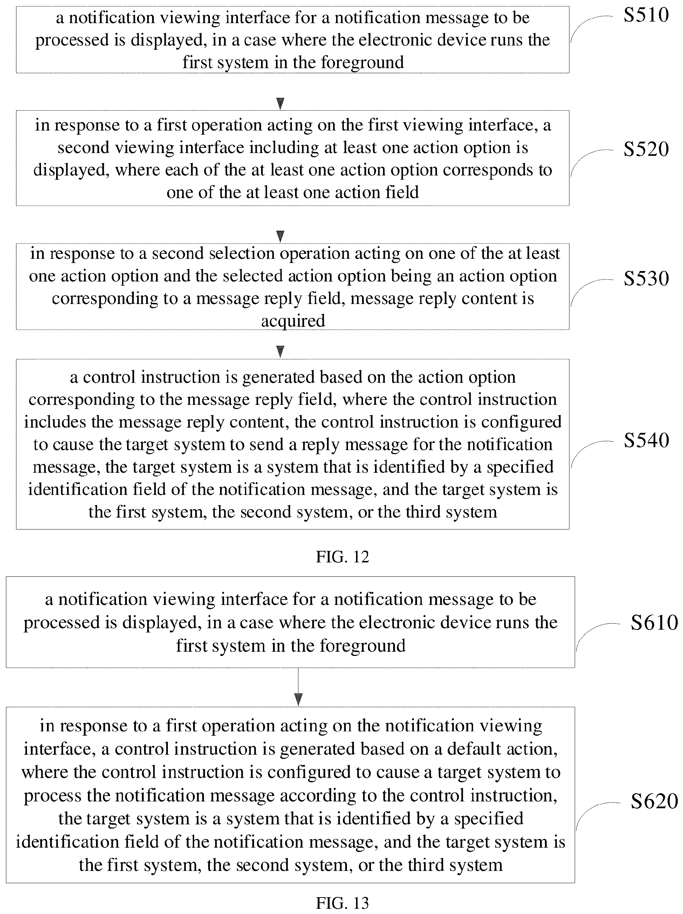

Referring to FIG. 12, it illustrates a notification message processing method according to still yet another embodiment of the disclosure. The method may be implemented by an electronic device. The electronic device is equipped with a first processor and a second processor, the first processor is configured to run a first system, the second processor is configured to run a second system. A communication connection is established between the electronic device and a mobile terminal, and the mobile terminal is adapted for a third system (i.e., the mobile terminal is configured to run the third system). The method includes S510, S520, S530, and S540.

At S510, a notification viewing interface for a notification message to be processed is displayed, in a case where the electronic device runs the first system in the foreground.

The specific implementation of S510 may refer to the description of S110 in the previous embodiments, which will not be repeated here.

At S520, in response to a first operation acting on the first viewing interface, a second viewing interface including at least one action option is displayed, where each of the at least one action option corresponds to one of the at least one action field.

The specific implementation of S520 may refer to the description of S320 in the previous embodiments, which will not be repeated here.

At S530, in response to a second selection operation acting on one of the at least one action option and the selected action option being an action option corresponding to a message reply field, message reply content is acquired.

In the implementations of the disclosure, when the selected action option is the action option corresponding to the message reply field, the content used for reply needs to be acquired for the message reply field before the control instruction is generated.

Specifically, as an implementation, the first system may acquire the message reply content in response to the second selection operation acting on the action option corresponding to the message reply field. There are many manners for acquiring the message reply content, which is not specifically limited. For example, the message reply content may be input by a user input (including voice input or text input). Alternatively, a general reply content may be preset for the user to select. Alternatively, the message reply content may be acquired through image recognition.

At S540, a control instruction is generated based on the action option corresponding to the message reply field, where the control instruction includes the message reply content, the control instruction is configured to cause the target system to send a reply message for the notification message, the target system is a system that is identified by a specified identification field of the notification message, and the target system is the first system, the second system, or the third system.

The specific implementation of S540 may refer to the description of S120 and S330 in the previous embodiments, which will not be repeated here.

After the message reply content is obtained, a control instruction including the message reply content may be generated, so as to realize the quick reply to the notification message on behalf of the target system.

In the notification message processing method provided by the embodiments of the disclosure, in a case where the electronic device runs the first system in the foreground, the notification viewing interface for the notification message to be processed is displayed. In response to the first operation acting on the first viewing interface, the second viewing interface including at least one action option is displayed, where each of the at least one action option corresponds to one of the at least one action field. In response to the second selection operation acting on one of the at least one action option and the selected action option being the action option corresponding to a message reply field, the message reply content is acquired. The control instruction is generated based on the action option corresponding to the message reply field, where the control instruction includes the message reply content and it is configured to cause the target system to send a reply message for the notification message. The target system is a system that is identified by the specified identification field of the notification message, and the target system is the first system, the second system, or the third system. In this way, the first system may generate the corresponding control instruction according to the source of the notification message, and then instructs the source system of the notification message (i.e., the target system) to directly process the notification message according to the control instruction, which improves the universality and flexibility of notification message processing, and thus improves the user experience.

The convenience of notification message processing can be improved by using the control instruction to cause the target system to directly transmit the reply content for the notification message.

Referring to FIG. 13, it illustrates a notification message processing method according to still yet another embodiment of the disclosure. The method may be implemented by an electronic device. The electronic device is equipped with a first processor and a second processor, the first processor is configured to run a first system, the second processor is configured to run a second system. A communication connection is established between the electronic device and a mobile terminal, and the mobile terminal is adapted for a third system (i.e., the mobile terminal is configured to run the third system). The method includes S610 and S620.

At S610, a notification viewing interface for a notification message to be processed is displayed, in a case where the electronic device runs the first system in the foreground.

The specific implementation of S610 may refer to the description of S110 in the previous embodiments, which will not be repeated here.

At S620, in response to a first operation acting on the notification viewing interface, a control instruction is generated based on a default action, where the control instruction is configured to cause a target system to process the notification message according to the control instruction, the target system is a system that is identified by a specified identification field of the notification message, and the target system is the first system, the second system, or the third system.

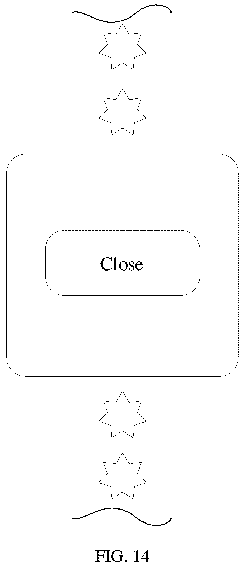

As described in the previous embodiments, when the notification message does not include an action field, the notification viewing interface may only display a general function button (the notification viewing interface only displays a "Close" function button as illustrated in FIG. 14), or display content of the notification message and the general function button (as illustrated in FIG. 5).

In this way, in response to detecting the first operation acting on the notification viewing interface, the first system may generate the control instruction based on the default action (such as the "Close" function button illustrated in FIG. 5 or FIG. 14). The specific content of the default action may be set according to actual needs.

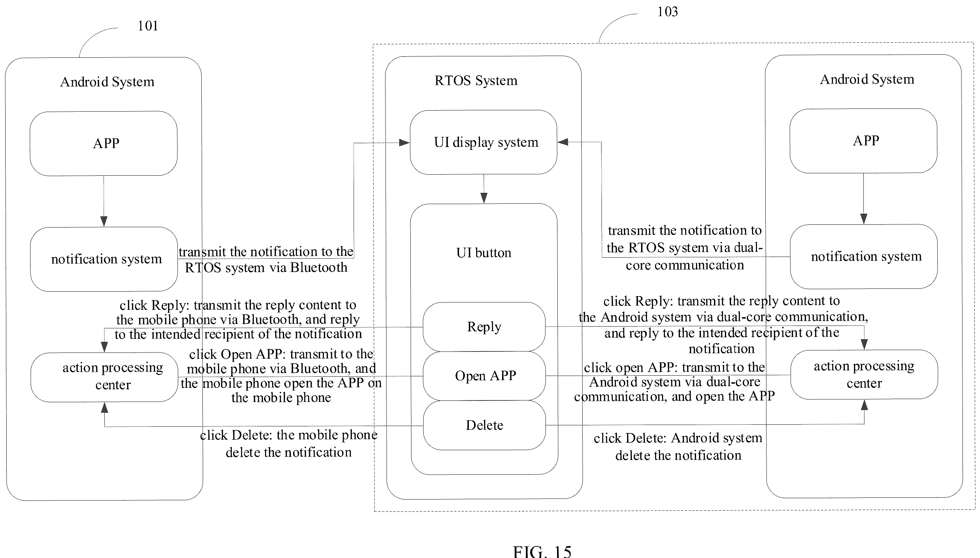

As illustrated in FIG. 15, it illustrates a flowchart of processing the notification message according to the embodiments of the disclosure. As illustrated in FIG. 15, it is assumed that the first system is an RTOS (Real Time Operating System) system running on a smart wearable watch 103, the second system is an Android system running on the smart wearable watch 103, and the third system is an Android system running on a mobile phone 101. For two systems running on the smart wearable watch 103, the RTOS system is a small-core system, and the Android system is a large-core system. The RTOS system and the Android system on the smart wearable watch 103 communicates with each other via dual-core communication, and the RTOS system on the smart wearable watch 103 and the Android system on the mobile phone 101 communicates with each other via Bluetooth (or other near-field communication manners) communication.

In some implementations, when an APP in the second system or the third system receives a notification message, the notification message may be transmitted to the notification system. The RTOS system may receive not only the notification message transmitted from the second system on the smart wearable watch 103 through dual-core communication, but also the notification message transmitted from the third system on the mobile phone 101 through Bluetooth communication. The RTOS system may display the received notification messages as illustrated in FIG. 2. In response a user's touch on a certain notification message, the interface would jump to a UI display system (i.e., the notification viewing interface illustrated in FIG. 4). In a case where the notification message has an action option, in response to the user's touch operation on the quick control function button illustrated in FIG. 4, the interface may jump to a UI button display interface (i.e., the second viewing interface illustrated in FIG. 10). Further, in response to detecting a user's touch operation on the "Reply" button, and determining that the notification message is transmitted from the large-core system, the first system may transmit the reply content to the large-core system via dual-core communication, so as to reply to an intended recipient of the notification message, i.e., a message reply object in the application. If the notification message is transmitted from the mobile phone, the first system may transmit the reply content to the mobile phone via Bluetooth, so as to reply to the intended recipient of the notification message. In response to detecting a user's touch operation on the "Open APP" button, and determining that the notification message is transmitted from the large-core system, the first system may transmit an instruction for initiating/starting an APP to the large-core system via dual-core communication, so that the application of the large-core may initiate/start the APP in response to the control instruction. If the notification message is transmitted from the mobile phone, the first system may transmit an instruction for initiating/starting an APP to the mobile phone via Bluetooth, so that the application of the mobile phone may initiate/start the APP in response to the control instruction. In response to detecting a user's touch operation on the "Delete" button, and determining that the notification message is transmitted from the large-core system, the first system may control the notification message to be deleted on the large-core according to a deletion instruction. If the notification message is transmitted from the mobile phone, the first system may control the notification message to be deleted on the mobile phone according to a deletion instruction. The second system and the third system may be configured with an action processing center for responding to the control instructions corresponding to the action options.

It is notable that the related contents between the various embodiments of the disclosure may be referred to each other, which will not be repeated here.

In the notification message processing method provided in the embodiments of the disclosure, in a case where the electronic device runs the first system in the foreground, the notification viewing interface for the notification message to be processed is displayed. In response to the first operation acting on the notification viewing interface, the control instruction is generated based on the default action. The control instruction is configured to cause the target system to process the notification message according to the control instruction, and the target system is a system that is identified by the specified identification field of the notification message, and the target system is the first system, the second system, or the third system. In this way, the first system may generate the corresponding control instruction according to the source of the notification message, and then instructs the source system of the notification message (i.e., the target system) to directly process the notification message according to the control instruction, which improves the universality and flexibility of notification message processing, and thus improves the user experience.

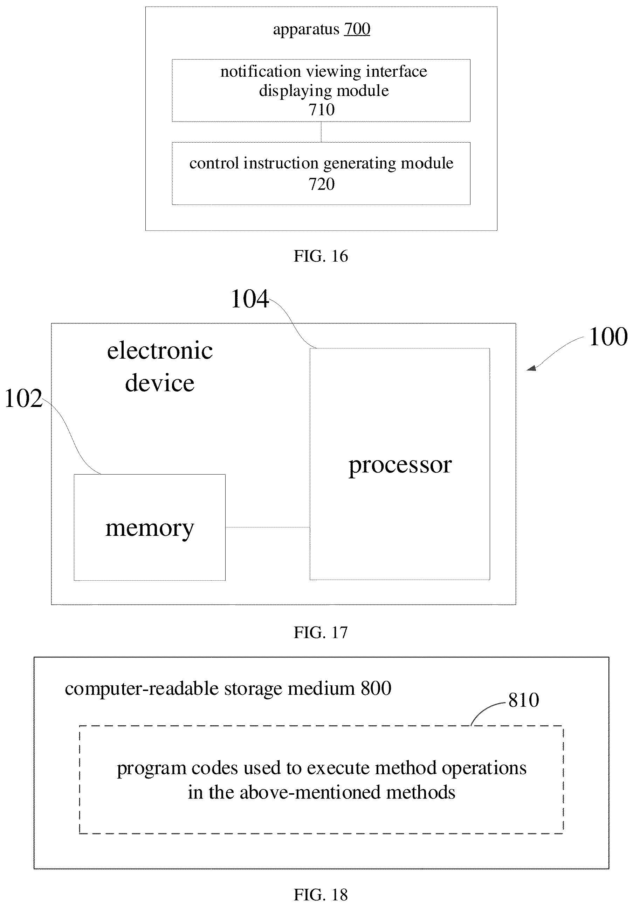

Referring to FIG. 16, some embodiments of the disclosure provide a notification message processing apparatus 700, which is implemented on an electronic device. The electronic device is equipped with a first processor and a second processor. The first processor is configured to run a first system, the second processor is configured to run a second system, a communication connection is established between the electronic device and a mobile terminal, and the mobile terminal runs a third system. The apparatus 700 includes a notification viewing interface 710 and a control instruction generating module 720.

The notification viewing interface displaying module 710 is configured to display a notification viewing interface for a notification message that is to be processed, in a case where the electronic device runs the first system in foreground.

The control instruction generating module is configured to generate a control instruction based on the first operation, in response to a first operation acting on the notification viewing interface. The control instruction is configured to cause a target system to process, according to the control instruction, the notification message, the target system is a system that is identified by a specified identification field of the notification message, and the target system is the first system, the second system, or the third system.

In the implementations of the disclosure, the notification message further includes at least one action field. In this manner, the control instruction generating module 720 may be configured to: display, in response to a first selection operation acting on the notification viewing interface, at least one action option on the notification viewing interface, where each of the at least one action option corresponds to one of the at least one action field; and generate, in response to a second selection operation acting on one of the at least one action option, a control instruction based on the selected action option.

In the implementations of the disclosure, the notification message further includes at least one action field, and the notification viewing interface includes a first viewing interface and a second viewing interface. In this manner, the control instruction generation module 720 may be configured to display, in response to the first operation acting on the first viewing interface, a second viewing interface including at least one action option, where each of the at least one action option corresponds to one of the at least one action field; and generate, in response to a second selection operation acting on one of the at least one action option, the control instruction based on the selected action option.

In the implementations of the disclosure, the second viewing interface is configured with a function button for an action option. In this manner, the generating, in response to the second selection operation acting on one of the at least one action option, the control instruction based on the selected action option, includes: in response to detecting a third operation acting on the function button for the action option, generating the control instruction based on the touched function button.

In the implementations of the disclosure, the action field may include a message reply field. In this manner, the generating, in response to the second selection operation acting on one of the at least one action option, the control instruction based on the selected action option, may include: in response to detecting that the second selection operation is acted on one of the at least one action option and the selected action option corresponds to the message reply field, acquiring message reply content; and generating the control instruction based on the selected action option corresponding to the message reply field, where the control instruction comprises the message reply content, and the control instruction is configured to cause the target system to send a reply message for the notification message.

In the implementations of the disclosure, the action field may include a message reply field, and the generating, in response to the second selection operation acting on one of the at least one action option, the control instruction based on the selected action option, may include: in response to the second selection operation acting on one of the at least one action option , generating the control instruction based on the action option corresponding to the message reply field, where the control instruction is configured to cause the target system to mark the notification message as pending for reply.

In the implementations of the disclosure, the action field may include a message deletion field, and the generating, in response to the second selection operation acting on one of the at least one action option, the control instruction based on the selected action option, may include: in response to the second selection operation acting on one of the at least one action option, generating a control instruction based on an action option corresponding to the message deletion field, where the control instruction is configured to cause the target system to delete the notification message.

In the implementations of the disclosure, the action field may include a message open field, the message open field is configured to open an application for the notification message, and the generating, in response to the second selection operation acting on one of the at least one action option, the control instruction based on the selected action option, may include: in response to the second selection operation acting on one of the at least one action option, generating a control instruction based on an action option corresponding to the message open field, wherein the control instruction is configured to cause the target system to open the notification message.

In a way, the control instruction generating module 720 may be configured to: generate, in response to the first operation acting on the notification viewing interface, a control instruction for a default action.

In at least one embodiment, the apparatus 700 may further include a processing module, configured to: after generating the control instruction based on the first operation in response to the first operation acting on the notification viewing interface, transmit the control instruction to the second system when the target system is the second system, and control the second system to process the notification message according to the control instruction; and transmit the control instruction to the third system when the target system being the third system, and control the third system to process the notification message according to the control instruction.

In the implementations of the disclosure, the first system, the second system, and the third system comply with the same message push protocol.

Those skilled in the art can clearly understand that, for the convenience and brevity of description, the specific working processes of the above apparatus and the modules may be referred to the corresponding processes in the above-mentioned method embodiments, which will not be repeated here.

In the various embodiments of the disclosure, the shown or discussed mutual couplings or direct couplings or communication connections may be indirect couplings or communication connections achieved through some interfaces, devices, or modules, or may be electrical, mechanical, or in other forms.

In addition, the individual functional modules in various embodiments of the disclosure may be integrated into one processing module, or each of the modules may exist alone physically, or two or more modules may be integrated into one module. The above-mentioned integrated module may be implemented in a form of hardware, or may be implemented in a form of a software functional module.

Referring to FIG. 17, based on the above-mentioned notification message processing method and apparatus, some embodiments of the disclosure further provide an electronic device 100 that is capable of executing the above-mentioned notification message processing method. The electronic device 100 includes a memory 102, one or more processors 104 (only one is illustrated in FIG. 17) coupled to each other, and a communication line is connected between the memory 102 and the processor 104. The memory 102 stores a program that is capable of executing the contents in the foregoing embodiments, and the memory 102 may store a notification message processing apparatus. The notification message processing apparatus may be the apparatus 700 described below, and the processor 104 may execute the program stored in the memory 102.

The processor 104 may include one or more processing cores. The processor 104 uses various interfaces and lines to connect various parts within the entire electronic device 100, and executes various functions of the electronic device 100 and processes data by running or executing instructions, programs, code sets, or instruction sets stored in the memory 102, and calling data stored in the memory 102. In some implementations, the processor 104 may be implemented through at least one hardware of digital signal processing (DSP), field-programmable gate array (FPGA), and programmable logic array (PLA). The processor 104 may integrate one or a combination of a central processing unit (CPU), a graphics processing unit (GPU), and a modem, etc. Specifically, the CPU mainly processes an operating system, a user interface, an application program, etc.; the GPU is configured to render and draw display content; and the modem is configured to process wireless communication. It is understandable that the above-mentioned modem may not be integrated into the processor 104, but be implemented separately through a single communication chip.

The memory 102 may include a random access memory (RAM) and/or a read-only memory (ROM). The memory 102 may be configured to store instructions, programs, codes, code sets, or instruction sets. The memory 102 may include a program storage area and a data storage area. The program storage area may be configured to store instructions for implementing an operating system, instructions for implementing at least one function (such as a touch function, a sound playback function, and an image playback function), instructions for implementing the foregoing various embodiments, etc. The data storage area may be further configured to store data created by the electronic device 100 during use (such as a phone book, audio and video data, chat record data).

Referring to FIG. 18, it illustrates a structural block diagram of a computer-readable storage medium according to some embodiment of the disclosure. The computer-readable storage medium 800 stores program codes therein, and the program codes can be called and executed by a processor to execute the method described in the above-mentioned method embodiments.

The computer-readable storage medium 800 may be an electronic memory such as a flash memory, an electrically erasable programmable read-only memory (EEPROM), an erasable programmable read-only memory (EPROM), a hard disk, or a ROM. In some implementations, the computer-readable storage medium 800 includes a non-transitory computer-readable storage medium. The computer-readable storage medium 800 has a storage space for program codes 810 used to execute any method steps in the above-mentioned methods. These program codes may be read from or written into one or more computer program products. The program code 810 may be compressed, for example, in an appropriate form.

Based on the above, the embodiments of the disclosure provide the notification message processing method and apparatus, the electronic device and the storage medium. In a case where the electronic device runs the first system in the foreground, the notification viewing interface for the notification message to be processed is displayed. In response to the first operation acting on the notification viewing interface, the control instruction is generated based on the first operation. The control instruction is configured to cause the target system to process the notification message according to the control instruction, and the target system is a system that is identified by the specified identification field of the notification message, and the target system is the first system, the second system, or the third system. In this way, the first system may generate the corresponding control instruction according to the source of the notification message, and then instructs the source system of the notification message (i.e., the target system) to directly process the notification message according to the control instruction, which improves the universality and flexibility of notification message processing, and thus improves the user experience.

It is notable that the above embodiments are only used to illustrate the technical solutions of the disclosure, rather than being construed as a limitation. Although the disclosure has been described in detail with reference to the aforementioned embodiments, those skilled in the art should understand that modifications may be made to the technical solutions described in the foregoing embodiments, or equivalent replacements may be made to some of the technical features therein. Such modifications or replacements do not cause the essence of the corresponding technical solutions to deviate from the spirit and scope in the technical solutions of the embodiments of the disclosure.

## Claims

1. A notification message processing method, implemented by an electronic device, wherein the electronic device is equipped with a first processor and a second processor, the first processor is configured to run a first system, the second processor is configured to run a second system, a communication connection is established between the electronic device and a mobile terminal, the mobile terminal runs a third system, and the method comprises:
displaying a notification viewing interface for a notification message that is to be processed, in a case where the electronic device runs the first system in foreground; and
in response to a first operation acting on the notification viewing interface, generating a control instruction based on the first operation, wherein the control instruction is configured to cause a target system to process, according to the control instruction, the notification message, the target system is a system that is identified by a specified identification field of the notification message, and the target system is the first system, the second system, or the third system.

2. The method as claimed in claim 1, wherein after generating the control instruction based on the first operation in response to the first operation acting on the notification viewing interface, the method further comprises:
in a case where the target system is the second system, transmitting the control instruction to the second system, and controlling the second system to process the notification message according to the control instruction; and/or
in a case where the target system is the third system, transmitting the control instruction to the third system, and controlling the third system to process the notification message according to the control instruction.

3. The method as claimed in claim 1 or claim 2, wherein the first system, the second system, and the third system comply with a same message push protocol.

4. The method as claimed in claim 1, wherein the notification message further comprises at least one action field, and the generating the control instruction based on the first operation in response to the first operation acting on the notification viewing interface, comprises:
in response to a first selection operation acting on the notification viewing interface, displaying at least one action option on the notification viewing interface, wherein each of the at least one action option corresponds to one of the at least one action field; and
in response to a second selection operation acting on one of the at least one action option, generating the control instruction based on the selected action option.

5. The method as claimed in claim 4, wherein the first selection operation is configured to select the notification message that is to be processed, and the second selection operation is configured to select an action option indicating a processing manner for the notification message.

6. The method as claimed in claim 1, wherein the notification message further comprises at least one action field, the notification viewing interface comprises a first viewing interface and a second viewing interface, and the generating the control instruction based on the first operation in response to the first operation acting on the notification viewing interface, comprises:
in response to the first operation acting on the first viewing interface, displaying a second viewing interface including at least one action option, wherein each of the at least one action option corresponds to one of the at least one action field; and
in response to a second selection operation acting on one of the at least one action option, generating the control instruction based on the selected action option.

7. The method as claimed in claim 6, wherein before displaying the second viewing interface including at least one action option in response to the first operation acting on the first viewing interface, the method further comprises:
displaying the first viewing interface, in response to detecting a touch operation acting on the notification message.

8. The method as claimed in claim 6, wherein the second viewing interface is configured with a function button for an action option, and the method further comprises:
in response to detecting a third operation acting on the function button for the action option, generating the control instruction based on the touched function button.

9. The method as claimed in claim 4 or claim 6, wherein the action field comprises a message reply field, and the generating the control instruction based on the selected action option in response to the second selection operation acting on one of the at least one action option, comprises:
in response to the second selection operation acting on one of the at least one action option, generating the control instruction based on the action option corresponding to the message reply field, wherein the control instruction is configured to cause the target system to mark the notification message as pending for reply.

10. The method as claimed in claim 4 or claim 6, wherein the action field comprises a message reply field, and the generating the control instruction based on the selected action option in response to the second selection operation acting on one of the at least one action option, comprises:
in response to detecting that the second selection operation is acted on one of the at least one action option and the selected action option corresponds to the message reply field, acquiring message reply content; and
generating the control instruction based on the selected action option corresponding to the message reply field, wherein the control instruction comprises the message reply content, and the control instruction is configured to cause the target system to send a reply message for the notification message.

11. The method as claimed in claim 4 or claim 6, wherein the action field comprises a message deletion field, and the generating the control instruction based on the selected action option in response to the second selection operation acting on one of the at least one action option, comprises:
in response to the second selection operation acting on one of the at least one action option, generating a control instruction based on an action option corresponding to the message deletion field, wherein the control instruction is configured to cause the target system to delete the notification message.

12. The method as claimed in claim 4 or claim 6, wherein the action field comprises a message open field, the message open field indicates opening an application for the notification message, and the generating the control instruction based on the selected action option in response to the second selection operation acting on one of the at least one action option, comprises:
in response to the second selection operation acting on one of the at least one action option, generating a control instruction based on an action option corresponding to the message open field, wherein the control instruction is configured to cause the target system to open the notification message.

13. The method as claimed in claim 1, wherein the generating the control instruction based on the first operation in response to the first operation acting on the notification viewing interface, comprises:
in response to the first operation acting on the notification viewing interface, generating a control instruction for a default action.

14. The method as claimed in any one of claims 1 to 13, wherein in a case where the first system runs in the foreground, and the second system runs in background or the second system is in a sleep state, the first system processes the notification message for the second system, and transmits the control instruction including a processing result to the second system.

15. The method as claimed in any one of claims 1 to 13, wherein the notification viewing interface is configured to display a message processing manner for the notification message that is to be processed, and different notification messages have different message processing manners.

16. The method as claimed in any one of claims 1 to 13, wherein when the target system is the first system or the second system, the specified identification field comprises a device identification field and a system identification field; and when the target system is the third system, the specified identification field comprises a device identification field.

17. The method as claimed in claim 16, wherein the device identification field is configured to identify a device from which the notification message is transmitted, and the system identification field is configured to identify a system from which the notification message is transmitted.

18. A notification message processing apparatus, implemented by an electronic device, wherein the electronic device is equipped with a first processor and a second processor, the first processor is configured to run a first system, the second processor is configured to run a second system, a communication connection is established between the electronic device and a mobile terminal, the mobile terminal runs a third system, and the apparatus comprises:
a notification viewing interface displaying module, configured to display a notification viewing interface for a notification message that is to be processed, in a case where the electronic device runs the first system in foreground; and
a control instruction generating module, configured to generate a control instruction based on a first operation in response to the first operation acting on the notification viewing interface, wherein the control instruction is configured to cause a target system to process the notification message according to the control instruction, the target system is a system that is identified by a specified identification field of the notification message, and the target system is the first system, the second system, or the third system.

19. An electronic device, comprising one or more processors and a memory;
wherein one or more programs are stored in the memory and configured to be executed by the one or more processors, and the one or more programs are configured to cause the method as claimed in any one of claims 1 to 17 to be implemented.

20. A computer-readable storage medium having program codes stored thereon, wherein the program codes, when being executed by a processor, causes the method as claimed in any one of claims 1 to 17 to be implemented.
